Europäisches Patentamt

European Patent Office

Office européen des brevets

(19)

(11) **EP 0 641 698 B1**

(12) **FASCICULE DE BREVET EUROPEEN**

(45) Date de publication et mention
de la délivrance du brevet:
**16.04.1997 Bulletin 1997/16**

(51) Int. Cl.[6]: **B60T 8/88**

(21) Numéro de dépôt: **94401746.6**

(22) Date de dépôt: **28.07.1994**

(54) **Installation de freinage pour véhicule automobile du type à système anti-blocage des roues**

Kraftfahrzeug-Bremsanordnung vom ABS-Typ

Vehicle brake system of the ABS type

(84) Etats contractants désignés:
**DE ES GB IT**

(30) Priorité: **02.09.1993 FR 9310466**

(43) Date de publication de la demande:
**08.03.1995 Bulletin 1995/10**

(73) Titulaires:
 • **AUTOMOBILES PEUGEOT**
 **75116 Paris (FR)**
 • **AUTOMOBILES CITROEN**
 **92200 Neuilly-sur-Seine (FR)**

(72) Inventeur: **Bailleux, François**
 **F-91400 Val d'Albian (FR)**

(74) Mandataire: **Thinat, Michel et al**
 **Cabinet Weinstein,**
 **20 Avenue de Friedland**
 **75008 Paris (FR)**

(56) Documents cités:
 **FR-A- 2 391 096      FR-A- 2 544 268**
 **GB-A- 2 162 914**

## Description

L'invention concerne une installation de freinage pour véhicule automobile, du type décrit dans le préambule de la revendication 1.

Un système de ce type est connu par le document GB-A-2162914.

Il est connu d'associer dans des installations de freinage pour véhicules automobiles des systèmes antiblocage à un système de freinage classique comportant des répartiteurs de freinage arrière destinés à doser le frein arrière en fonction de la pression sur la pédale du véhicule pour éviter que les freins arrière bloquent avant les freins avant. Or, dans une telle installation, le répartiteur fait double usage car les roues arrière ne peuvent jamais bloquer et il n'est ainsi pas utile à la fonction de freinage.

De ce fait, il est également connu de ne pas prévoir de répartiteurs, ce qui pose cependant un problème lorsque le système anti-blocage est en panne car il y a alors un risque pour le conducteur du véhicule de perdre la directivité de celui-ci.

La présente invention a pour but de proposer une installation de freinage qui pallie l'inconvénient d'une installation de freinage équipée d'un système anti-blocage, en l'absence d'un répartiteur de freinage arrière.

Pour atteindre ce but, l'installation de freinage selon l'invention comporte les caractéristiques qui sont énoncées dans la partie caractérisante de la revendication 1.

Selon une caractéristique avantageuse de l'invention, les moyens détecteurs d'une défaillance de la commande principale sont agencés pour interrompre l'action de celle-ci sur les électrovannes du système anti-blocage lorsqu'une telle défaillance est détectée.

Selon une autre caractéristique de l'invention, les moyens pour diminuer le freinage des roues arrière sont agencés pour supprimer le freinage des roues arrière en cas de défaillance de la commande principale.

Selon encore une autre caractéristique avantageuse de l'invention, les moyens pour diminuer le freinage des roues arrière sont agencés pour réduire le freinage des roues arrière en cas de défaillance de la commande principale.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels.

La figure 1 montre, sous forme d'un schéma bloc, la structure d'une installation de freinage selon l'invention.

La figure 2 illustre schématiquement le circuit de freinage associé à chaque roue arrière, selon la présente invention.

La figure 3 montre à l'aide de quatre diagrammes a à d le fonctionnement du circuit selon la figure 2.

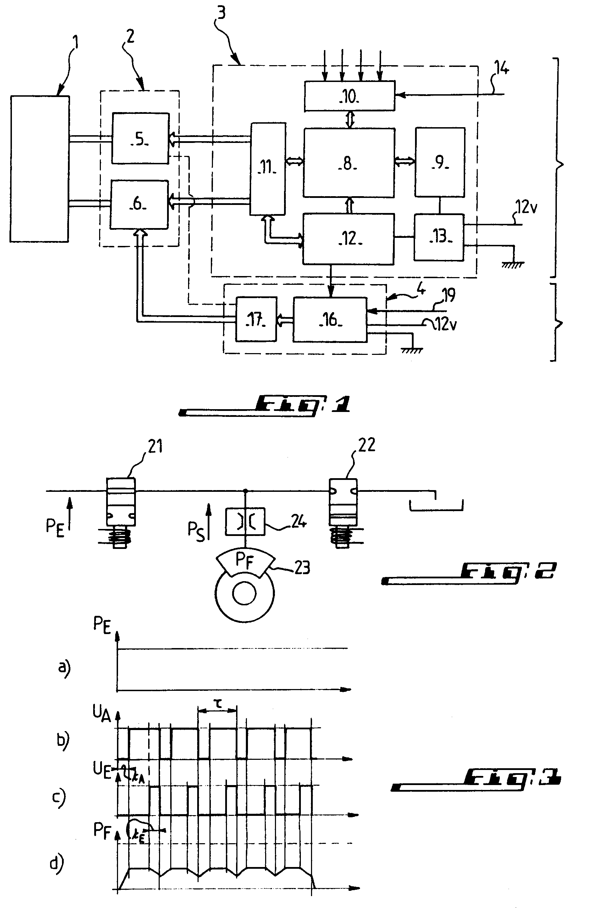

Comme il ressort de la figure 1, l'installation de freinage pour véhicule automobile, selon la présente invention, comprend un système de freinage classique 1 auquel sont associées en 2 les huit électrovannes d'un système anti-blocage, appelé système ABS, du type connu en soi, une commande principale 3 du dispositif d'électrovannes 2 et un dispositif électronique de commande de secours 4. Le dispositif des électrovannes 2 est divisé en deux groupes 5 et 6 représentant respectivement les électrovannes avant AV et les électrovannes arrière AR.

La commande principale 3 comprend essentiellement un calculateur 8 auquel sont associées une mémoire 9, une interface d'entrée 10 recevant les quatre informations concernant les vitesses des roues, symbolisées par quatre flèches, une interface de sortie 11 assurant la commande des électrovannes avant 5 et arrière 6, un détecteur de panne 12 ainsi que le dispositif d'alimentation en énergie électrique 13 qui est relié par une borne à la masse et par une autre borne à une tension de par exemple 12V. Il est encore à noter que l'interface d'entrée 10 reçoit également en 14 les informations de la pédale de frein.

La commande secondaire de secours 4 comprend essentiellement une logique câblée 16 et un circuit de sortie 17 par lequel cette commande agit sur les électrovannes arrière 6 comme le montre la figure et, facultativement, sur les électrovannes 5 comme cela est symbolisé par une ligne interrompue. La commande logique câblée reçoit en 19 les informations de la pédale de frein. La commande est reliée à une source de tension de par exemple 12V. Cette source de tension est indépendante de celle de la commande principale. Les deux sources peuvent éventuellement être reliées à la batterie du véhicule, mais par des fusibles et des fils différents. De cette manière, la commande secondaire est complètement autonome jusqu'à son alimentation électrique.

La commande secondaire de secours est adaptée pour assurer le fonctionnement des électrovannes lorsque la commande principale lui signale qu'elle est en panne après que la panne ait été détectée par le détecteur de panne 12.

Deux modes de fonctionnement de l'installation selon l'invention sont possibles.

Dans un premier cas, lorsqu'il y a une panne du système ABS, on retire les deux récepteurs de frein arrière et tout le freinage est effectué par les freins avant. Dans ce mode de réalisation, la logique est la plus simple, car elle consiste à supprimer le freinage arrière pour éviter le blocage de celui-ci. La commande de secours 4 ferme les électrovannes d'admission lorsqu'elle reçoit simultanément les informations suivantes :

- commande principale en panne ;

- action sur la pédale de frein (utilisation de l'interrupteur d'allumage des feux de stop arrière).

Selon le deuxième mode de fonctionnement, en cas de panne du système ABS, les électrovannes sont commandées par la commande électronique de secours 4 pour réduire la pression dans les freins arrière.

On expliquera le fonctionnement de l'installation en se référant aux figures 2 et 3. La figure 2 montre en 21 et 22 respectivement une électrovanne d'admission et une électrovanne d'échappement et en 23 un étrier de frein arrière qui est relié par l'intermédiaire d'un gicleur 24 au circuit hydraulique reliant les deux électrovannes. Les références PE et PS indiquent les pressions d'entrée et de sortie, PF est la pression de freinage. Les électrovannes sont représentées en position non active, c'est-à-dire que la tension à leurs bornes est nulle. $U_A$ indique la tension aux bornes de l'électrovanne d'admission 21 et $U_E$ la tension aux bornes de l'électrovanne d'échappement 22. Dans sa position non active, l'électrovanne d'admission 21 est passante et l'électrovanne d'échappement est fermée.

La figure 3 explique comment on obtient à partir des conditions indiquées aux figures 3a à 3c la pression de freinage PF de l'étrier de frein 23 qui est indiquée sur la figure 3d.

En effet, pendant une période $\tau$, le fonctionnement est le suivant :

- de 0 à $t_A$ l'électrovanne d'admission n'est plus alimentée. Elle est donc ouverte et la pression de freinage PF augmente.

- de $t_A$ à $(\tau-t_E)$ l'électrovanne d'admission est alimentée, c'est-à-dire qu'elle est fermée et la pression PF est constante.

- de $(\tau-t_E)$ à $\tau$ l'électrovanne d'échappement 22 est alimentée pour vider le circuit, ce qui a pour conséquence que la pression PF diminue.

Dans ces conditions on peut formuler la loi suivante :

$$PF = K \times PE$$

où K est une fonction de $t_A$, $t_E$, $\tau$. Par exemple si $t_A = t_E = \frac{1}{4}\tau$ on obtient approximativement $PF = \frac{1}{2} PE$.

Il est à noter que le gicleur 24 a pour fonction de lisser la pression PS pour obtenir PF.

En se référant à la figure 2, on constate encore que la suppression du freinage arrière selon le premier mode de fonctionnement s'obtient par fermeture de l'électrovanne d'admission et ouverture de l'électrovanne d'échappement.

A partir des explications précédentes on peut résumer la fonction de la logique de secours 4 de la manière suivante :

- lorsque la détection de panne par la commande principale indique un défaut de fonctionnement, les circuits de sortie 11 de la commande principale cessent leurs actions qui sont alors reprises par la commande secondaire 4 ;

- les commandes de sortie de la commande de secours 4 se mettent en oeuvre lorsque celle-ci reçoit simultanément avec le signalement de la panne l'information "pédale de frein actionnée" ou bien une information équivalente (par exemple donnée par un capteur lié à la pédale ou aux feux "stop", par capteur de pression dans le circuit des freins avant ou par accéléromètre) ;

- la commande secondaire n'est utilisée que pour les électrovannes arrière ;

- la commande secondaire peut exercer un contrôle du bon fonctionnement des électrovannes avant, soit en contrôlant le courant qui passe dans les électrovannes avant, soit par une information donnée par la commande principale qui est en mesure de détecter si les électrovannes avant sont bonnes. Dans ce cas, il faut un fil supplémentaire.

**Revendications**

1. Installation de freinage pour véhicule automobile, du type comprenant un système anti-blocage (2) des roues commandé par une commande électronique principale (3), et des moyens détecteurs (12) d'une défaillance de la commande principale (3), caractérisée en ce qu'elle comprend en outre une commande électronique de secours (4) indépendante de la commande principale (3) et pourvue de moyens (17) pour diminuer le freinage des roues arrière (6) lorsqu'une défaillance de la commande principale est détectée.

2. Installation de freinage selon la revendication 1, caractérisée en ce que les moyens détecteurs (12) d'une défaillance de la commande principale (3) sont agencés pour interrompre l'action de celle-ci à la suite de la détection d'une telle défaillance.

3. Installation de freinage selon l'une des revendications 1 ou 2, dans laquelle la commande principale (3) comprend un calculateur (8) auquel sont associées une interface d'entrée (10) destinée à recevoir des informations extérieures et une interface de sortie (11) pour la commande des électrovannes, une mémoire (9) et un dispositif d'alimentation en énergie électrique (13), caractérisée en ce que la commande principale (3) comprend en outre le détecteur de défaillance précité (12).

4. Installation de freinage selon l'une des revendications précédentes, caractérisée en ce que la commande de secours (4) comprend une source d'alimentation en énergie électrique, qui est indépendante de celle (13) de la commande principale (3).

5. Installation de freinage selon l'une des revendications précédentes, caractérisée en ce que les moyens (17) pour diminuer le freinage des roues arrière (6) sont agencés pour supprimer le freinage des roues arrière en cas de défaillance de la commande principale (3).

6. Installation de freinage selon l'une des revendications 1 à 4, caractérisée en ce que les moyens (17) pour diminuer le freinage des roues arrière sont agencés pour réduire le freinage de ces roues en cas de défaillance de la commande principale (3).

7. Installation de freinage selon l'une des revendications précédentes, caractérisée en ce qu'un circuit de freinage d'une roue arrière comprend une électrovanne d'admission (21), une électrovanne d'échappement (22) et un étrier de frein arrière (23) monté entre ces deux électrovannes.

8. Installation de freinage selon les revendications 5 et 7, caractérisée en ce que la suppression du freinage arrière se fait par une mise en position de fermeture de l'électrovanne d'admission (21) et mise en position d'ouverture de l'électrovanne d'échappement (22).

9. Installation de freinage selon les revendications 6 et 7, caractérisée en ce que les moyens de diminution du freinage par réduction sont adaptés pour assurer une pression de freinage arrière (PF) par ouverture et fermeture simultanées des électrovannes d'admission et d'échappement respectivement, puis par ouverture de l'électrovanne d'échappement (22) tout en maintenant l'électrovanne d'admission à l'état de fermeture.

10. Installation de freinage selon l'une des revendications précédentes, caractérisée en ce que la commande de secours (4) est adaptée pour assurer la commande des électrovannes arrière (6) à la réception simultanée d'une information de panne de la commande principale (3) et d'une information de l'actionnement de la pédale de frein.

11. Installation de freinage selon la revendication 10, caractérisée en ce que la source du signal d'actionnement de la pédale de frein est un capteur lié à la pédale ou aux feux "stop", un capteur de pression dans le circuit des freins avant ou un accéléromètre.

12. Installation de freinage selon l'une des revendications précédentes, caractérisée en ce que la commande secondaire de secours (4) comporte des moyens de contrôle du bon fonctionnement des électrovannes avant (5).

13. Installation de freinage selon la revendication 12, caractérisée en ce que le contrôle est un contrôle du courant passant dans les électrovannes avant (5) ou un contrôle par une information donnée par la commande principale (3).

**Claims**

1. Braking equipment for an automotive vehicle, of the type comprising a system (2) for the anti-blocking of the wheels controlled by a main electronic control (3) and means (12) for detecting a failure of the main control (3), characterized in that it further comprises an electronic emergency control (4) independent of the main control (3) and provided with means (17) to decrease the braking of the rear wheels (6) when a failure of the main control is sensed.

2. Braking equipment according to claim 1, characterized in that the means (12) for detecting a failure of the main control (3) are arranged to discontinue the action of the latter following the sensing of such a failure.

3. Braking equipment according to one of claims 1 and 2, in which the main control (3) comprises a computer (8) with which are associated an input interface (10) intended to receive external information and an output interface (11) for the control of electro-valves, a storage (9) and an electric energy feeding device (13), characterized in that the main control (3) further comprises the aforesaid failure detector (12).

4. Braking equipment according to one of the foregoing claims, characterized in that the emergency control (4) comprises an electric energy feeding source which is independent of that (13) of the main control (3).

5. Braking equipment according to one of the foregoing claims, characterized in that the means (17) for decreasing the braking of the rear wheels (6) are arranged to remove the braking from the rear wheels in case of failure of the main control (3).

6. Braking equipment according to one of claims 1 to 4, characterized in that the means (17) for decreasing the braking of the rear wheels are arranged to reduce the braking of these wheels in case of failure of the main control (3).

7. Braking equipment according to one of the foregoing claims, characterized in that a circuit for the braking of one rear wheel comprises an intake electro-valve (21), an exhaust electro-valve (22) and a rear brake caliper (23) mounted between these two electro-valves.

8. Braking equipment according to claims 5 and 7, characterized in that the removal of the rear braking is made by a putting of the intake electro-valve (21) in the closed position and by putting the exhaust electro-valve (22) in the open position.

9. Braking equipment according to claims 6 and 7, characterized in that the means for decreasing the braking through reducing are adapted to ensure a rear braking pressure (PF) by simultaneous opening and closing of the intake and exhaust electro-valves, respectively, and then by opening of the exhaust electro-valve (22) while keeping the intake electro-valve in the closed state.

10. Braking equipment according to one of the foregoing claims, characterized in that the emergency control (4) is adapted to ensure the control of the rear electro-valves (6) upon the simultaneous receiving of a breakdown information of the main control (3) and of an information on the actuation of the brake pedal.

11. Braking equipment according to claim 10, characterized in that the source of the signal of actuation of the brake pedal is a sensor connected to the pedal or to the "stop" lights, a pressure sensor in the front brakes circuit or an accelerometer.

12. Braking equipment according to one of the foregoing claims, characterized in that the secondary emergency control (4) comprises means for checking the good operation of the front electro-valves (5).

13. Braking equipment according to claim 12, characterized in that the checking is a checking of the current flowing through the front electro-valves (5) or a checking by an information given by the main control (3).

**Patentansprüche**

1. Bremsanlage für ein Kraftfahrzeug, derjenigen Gattung mit einem durch eine elektronische Hauptsteuervorrichtung (3) betätigten Antiblockierungssystem (2) für die Räder und Mitteln (12) zur Aufspürung eines Ausfalles der Hauptsteuervorrichtung (3), dadurch gekennzeichnet, daß sie ausserdem eine von der Hauptsteuervorrichtung (3) unabhängige elektronische Hilfssteuervorrichtung (4) umfaßt, die mit Mitteln (17) versehen ist, um die Bremsung der Hinterräder (6) zu vermindern, wenn ein Ausfall der Hauptsteuervorrichtung ermittelt worden ist.

2. Bremsanlage nach Anspruch 1, dadurch gekennzeichnet, daß die Mittel (12) zum Aufspüren eines Ausfalles der Hauptsteuervorrichtung (3) angeordnet sind, um nach der Aufspürung eines solchen Ausfalles, die Wirkung der letzteren zu unterbrechen.

3. Bremsanlage nach einem der Ansprüche 1 und 2, bei welcher die Hauptsteuervorrichtung (3) einen Rechner (8), dem eine zum Empfang von äusseren Nachrichten bestimmte Eingangsschnittstelle (10) und eine zur Betätigung der Magnetventile bestimmte Ausgangsschnittstelle (11) zugeordnet sind, einen Speicher (9) und eine Vorrichtung (13) zur Speisung mit elektrischer Energie umfaßt, dadurch gekennzeichnet, daß die Hauptsteuervorrichtung (3) ausserdem das vorgenannte Ausfallaufspürmittel (12) aufweist.

4. Bremsanlage nach einem der vorangehenden Ansprüche, dadurch gekennzeichnet, daß die Hilfssteuervorrichtung (4) eine Quelle zur Speisung mit elektrischer Energie, die von derjenigen (13) der Hauptsteuervorrichtung (3) unabhängig ist, umfaßt.

5. Bremsanlage nach einem der vorangehenden Ansprüche, dadurch gekennzeichnet, daß die Mittel (17), um die Bremsung der Hinterräder (6) herabzusetzen, angeordnet sind, um die Bremsung der Hinterräder beim Ausfall der Hauptsteuervorrichtung (3) aufzuheben.

6. Bremsanlage nach einem der Ansprüche 1 bis 4, dadurch gekennzeichnet, daß die Mittel (17), um die Bremsung der Hinterräder zu vermindern, angeordnet sind, um die Bremsung dieser Räder beim Ausfall der Hauptsteuervorrichtung (3) zu verringern.

7. Bremsanlage nach einem der vorangehenden Ansprüche, dadurch gekennzeichnet, daß eine Stromkreisschaltung zur Bremsung eines Hinterrades ein Einlaßmagnetventil (21), ein Auslaßmagnetventil (22) und einen zwischen diesen beiden Magnetventilen angeordneten hinteren Bremssattel (23) aufweist.

8. Bremsanlage nach Anspruch 5 und 7, dadurch gekennzeichnet, daß die Aufhebung der hinteren Bremsung durch ein in Schließstellungbringen des Einlaßmagnetventils (21) und in Öffnungsstellungbringen des Auslaßmagnetventils (22) geschieht.

9. Bremsanlage nach den Ansprüchen 6 und 7, dadurch gekennzeichnet, daß die Mittel zur Herabsetzung der Bremsung durch Verringern geeignet sind, um einen hinteren Bremsdruck (PF) durch gleichzeitiges Öffnen und Schliessen jeweils des Einlaß- und Auslaßmagnetventils und dann durch Öffnen des Auslaßmagnetventils (22) beim Halten des Einlaßmagnetventils in dem Schließzustand zu gewährleisten.

10. Bremsanlage nach einem der vorangehenden Ansprüche, dadurch gekennzeichnet, daß die Hilfssteuervorrichtung (4) geeignet ist, um die Betätigung der hinteren Magnetventile (6) beim gleichzeitigen Empfang einer Meldung über den Ausfall der Hauptsteuervorrichtung (3) und einer Meldung der Betätigung des Bremspedals zu gewährleisten.

11. Bremsanlage nach Anspruch 10, dadurch gekennzeichnet, daß die Quelle des Signals der Betätigung des Bremspedals ein an das Pedal oder an den Bremsleuchten gebundener Fühler, ein in der Stromkreisschaltung der Vorderbremsen angeordneter Druckmeßwertgeber oder ein Beschleunigungsmeßer ist.

12. Bremsanlage nach einem der vorangehenden Ansprüche, dadurch gekennzeichnet, daß die sekundäre Hilfssteuervorrichtung (4) Mittel zur Kontrolle der guten Arbeitsweise der vorderen Magnetventile (5) aufweist.

13. Bremsanlage nach Anspruch 12, dadurch gekennzeichnet, daß die Kontrolle eine Kontrolle des durch die vorderen Magnetventile (5) fließenden Stromes oder eine Kontrolle durch eine durch die Hauptsteuervorrichtung (3) gegebene Meldung ist.

_Fig.1_

_Fig.2_

_Fig.3_